(19)

**Europäisches Patentamt**
**European Patent Office**
**Office européen des brevets**

(11)  **EP 3 548 752 B2**

(12)  # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**25.09.2024   Patentblatt 2024/39**

(45) Hinweis auf die Patenterteilung:
**06.01.2021   Patentblatt 2021/01**

(21) Anmeldenummer: **17849899.4**

(22) Anmeldetag: **30.11.2017**

(51) Internationale Patentklassifikation (IPC):
**F15B 13/00** (2006.01)          **F15B 20/00** (2006.01)
**E04G 21/04** (2006.01)

(52) Gemeinsame Patentklassifikation (CPC):
**E04G 21/0436; E04G 21/0445; E04G 21/0463;**
F15B 20/00; F15B 2211/30525; F15B 2211/3144;
F15B 2211/324; F15B 2211/327; F15B 2211/35;
F15B 2211/75; F15B 2211/8643

(86) Internationale Anmeldenummer:
**PCT/EP2017/081006**

(87) Internationale Veröffentlichungsnummer:
**WO 2018/100074 (07.06.2018 Gazette 2018/23)**

---

(54) **GROSSMANIPULATOR MIT SCHNELL EIN- UND AUSFALTBAREM KNICKMAST**

LARGE MANIPULATOR HAVING AN ARTICULATED MAST THAT CAN BE QUICKLY FOLDED AND UNFOLDED

MANIPULATEUR DE GRANDE TAILLE MUNI D'UN MÂT ARTICULÉ RAPIDEMENT REPLIABLE ET DÉPLOYABLE

---

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2016   DE 102016123160**

(43) Veröffentlichungstag der Anmeldung:
**09.10.2019   Patentblatt 2019/41**

(73) Patentinhaber: **Schwing GmbH**
**44653 Herne (DE)**

(72) Erfinder:
• **HENIKL, Johannes**
**46282 Dorsten (DE)**
• **VIERKOTTEN, Reiner**
**46145 Oberhausen (DE)**
• **LEHMANN,Andreas**
**47441 Moers (DE)**
• **SCHNITTKER, Joseph**
**verstorben (DE)**

(74) Vertreter: **Schneiders & Behrendt Bochum**
**Gerard-Mortier-Platz 6**
**44793 Bochum (DE)**

(56) Entgegenhaltungen:
EP-A1- 2 347 988          EP-A1- 2 500 584
EP-A1- 3 015 625          EP-A1- 3 088 782
WO-A1-2014/165888       WO-A1-2014/165889
CN-U- 204 284 052         DE-A1- 102013 006 232
JP-A- 2013 091 931        JP-A- 2013 091 933
US-A- 4 759 183           US-A1- 2008 162 005
US-A1- 2016 076 263

• **HARTMUT BENCKERT: "Mechydronic® für die Maststeuerung von Autobetonpumpen Zusammenwirken von Mechanik, Hydraulik und Elektronik", WISSENSPORTAL BAUMASCHINE, 2004, pages 1 - 12**

EP 3 548 752 B2

**Beschreibung**

Die Erfindung betrifft einen Großmanipulator, insbesondere eine Autobetonpumpe, mit einem um eine vertikale Achse mittels eines Drehantriebs drehbaren Drehschemel, der auf einem Fahrgestell angeordnet ist, einem Knickmast, der zwei oder mehr Mastsegmente umfasst, wobei die Mastsegmente über Knickgelenke mit dem jeweils benachbarten Drehschemel oder Mastsegment mittels je eines Antriebs schwenkbeweglich verbunden sind, mit einer die Antriebe in einem Normalbetrieb ansteuernden Steuereinrichtung für die Mastbewegung, und einer Mastsensorik zur Erfassung der Lage mindestens eines Punktes des Knickmastes oder eines Schwenkwinkels zumindest eines Knickgelenks, wobei die Steuereinrichtung dazu eingerichtet ist, die Geschwindigkeit der Mastbewegung in Abhängigkeit von den momentanen Ausgangssignalen der Mastsensorik zu begrenzen.

Ein solcher Großmanipulator ist in EP 3 015 625 A1 oder JP 2013091931 A offenbart. Ein weiterer Großmanipulator ist beispielsweise in US 2008/162005 A1 offenbart.

Die EP 3 088 782 A1 offenbart ein hydraulisches Steuerventil in Schieberbauweise mit einem Schieberkolben, dessen Hub in einem Gehäuse entlang einer Hubrichtung in wenigstens einem ersten Betriebsmodus und einem zweiten Betriebsmodus einstellbar ist, wobei sich ein im ersten Betriebsmodus festgelegter erster Maximalhub von einem im zweiten Betriebsmodus festgelegten zweiten Maximalhub unterscheidet..

Großmanipulatoren sind in einer Vielzahl von Ausgestaltungen aus dem Stand der Technik bekannt. Einen Großmanipulator mit Knickmast offenbart zum Beispiel die WO 2014/166637 A1, die JP 2013 091933 A, die US 2016/076263 A1 und die DE 10 2013 006232 A1.

Als Antriebe, die zum Verschwenken der Mastsegmente um die Knickgelenke relativ zum jeweils benachbarten Mastsegment bzw. Drehschemel verwendet werden, kommen typischerweise Hydraulikzylinder zum Einsatz. Diese werden über proportional arbeitende Steuerventile von einer elektronischen Steuereinrichtung angesteuert, um die Verfahrgeschwindigkeit der einzelnen Hydraulikzylinder variabel vorgeben zu können. Die Verfahrgeschwindigkeit der einzelnen Hydraulikzylinder ist bei bekannten Großmanipulatoren normalerweise begrenzt, da eine zu schnelle Bewegung des Knickmastes eine Gefährdung für in der Umgebung befindlichen Personen darstellt. Zur Gewährleistung der Betriebssicherheit existieren gesetzliche Normen, die die zulässige Maximalgeschwindigkeit der Spitze des Knickmastes festlegen.

Die Steuerventile der Hydraulikzylinder werden im Stand der Technik über eine mit der Steuereinrichtung drahtlos verbundene oder drahtgebundene Fernsteuerung betätigt. Alternativ können die Steuerventile zum Beispiel in einem Notbetrieb manuell über Handhebel gesteuert werden. Die Steuerventile sind dabei so ausgelegt, dass eine bestimmte Stellung eines Bedienhebels an der Fernsteuerung einem definierten Volumenstrom des Hydraulikfluids, d.h. einer definierten Verfahrgeschwindigkeit des jeweiligen Hydraulikzylinders entspricht. Dabei sind die Steuerventile so ausgelegt, dass bei gleichzeitigem Verschwenken aller Gelenke mit maximaler Verfahrgeschwindigkeit und vollständig gestrecktem Knickmast die erlaubte Höchstgeschwindigkeit der Mastspitze nicht erreicht wird. Diese Auslegung der Steuerventile hat den Nachteil, dass der gesetzlich erlaubte Rahmen für die Bewegungsgeschwindigkeit der Mastspitze in den meisten praktischen Fällen sehr schlecht ausgenutzt wird. Der zuvor angesprochene "Worst Case", in dem sämtliche Gelenke mit maximaler Geschwindigkeit bei vollständig gestrecktem Knickmast bewegt werden, tritt praktisch nie auf. Die Begrenzung der Bewegungsgeschwindigkeit führt daher in den meisten Fällen zu einer sehr langsamen Mastbewegung. Dadurch entstehen beim Ausfalten und Einfalten des Knickmastes erhebliche zeitliche Verzögerungen. Dies macht den Betrieb ineffizient.

Die zuvor erwähnte WO 2014/166637 A1 schlägt einen Großmanipulator vor, bei dem die Steuereinrichtung einen Eilgang für den Drehantrieb des Drehschemels vorsieht, um den Knickmast mit erhöhter Geschwindigkeit in die gewünschte Arbeitsposition zu drehen, wobei der Eilgang nur dann wählbar ist, wenn der Mast oder Ausleger vollständig zusammengefaltet ist. Ein einzelner Sensor, der mit der Steuereinrichtung zusammenwirkt, ist bei dem vorbekannten Großmanipulator vorgesehen, wobei über den Sensor feststellbar ist, ob der Knickmast vollständig zusammengefaltet ist oder nicht. Der Sensor erzeugt ein Freigabesignal an die Steuereinrichtung, solange sichergestellt ist, dass der Knickmast zusammengefaltet ist und damit einen minimalen Radius aufweist. In diesem Zustand kann der Knickmast mit erhöhter Geschwindigkeit gedreht werden.

Bei dem aus der zuvor genannten Druckschrift vorbekannten Großmanipulator wird der zulässige Rahmen für die Geschwindigkeit der Mastspitze immer noch unzureichend ausgenutzt. Nur bei vollständig zusammengefaltetem Knickmast ist eine Drehbewegung des Mastes mit erhöhter Geschwindigkeit möglich. In sämtlichen teilweise ausgefalteten Stellungen wird aber nach wie vor der Knickmast nur mit reduzierter Bewegungsgeschwindigkeit entsprechend dem "Worst Case" verfahren, und zwar in der Weise, dass unabhängig von der Maststellung niemals die gesetzlich zulässige Maximalgeschwindigkeit der Mastspitze überschritten wird. In den meisten Fällen liegt somit die erzielte Mastgeschwindigkeit immer noch deutlich unterhalb des gesetzlich Zulässigen. Nach wie vor dauern das Ausfalten und das Einfalten des Knickmastes zu lange.

Vor diesem Hintergrund ist es Aufgabe der Erfindung, einen verbesserten Großmanipulator bereitzustellen. Insbesondere soll der Knickmast in minimaler Zeit aus dem vollständig eingefalteten Zustand in seine gewünschte Arbeitsposition gebracht werden können. Ebenso soll der Knickmast aus der Arbeitsposition in minimaler Zeit in die vollständig eingefaltete Stellung überführt werden können. Zudem soll der Knickmast im aufgebauten Zustand zügig von einer Arbeitsposition zu einer anderen Arbeitsposition verfahrbar sein. Außerdem soll auch bei Ausfall der elektronischen Steuerung des Knickmastes, d.h. wenn der Knickmast manuell gesteuert werden muss, sichergestellt sein, dass die gesetzlichen Normen hinsichtlich der zulässigen Maximalgeschwindigkeit der Mastbewegung eingehalten werden. Diese Aufgabe wird durch die Merkmale des Anspruchs 1 bzw. des Anspruchs 4 gelöst.

Diese Aufgabe löst die Erfindung ausgehend von einem Großmanipulator der eingangs genannten Art dadurch, dass die Antriebe in einem Notbetrieb manuell steuerbar sind, wobei wenigstens ein Begrenzungsmittel vorgesehen ist, das in dem Notbetrieb die Verfahrgeschwindigkeit wenigstens eines der Antriebe auf einen fest vorgegebenen Maximalwert begrenzt. Die Erfindung löst die Aufgabe also dadurch, dass die Steuereinrichtung dazu eingerichtet ist, die Geschwindigkeit der Mastbewegung zu begrenzen, indem die Verfahrgeschwindigkeit wenigstens eines der Antriebe auf einen variablen, von den momentanen Ausgangssignalen der Mastsensorik abhängigen Maximalwert begrenzt wird, wobei die Antriebe in einem Notbetrieb manuell steuerbar sind, wobei wenigstens ein Begrenzungsmittel vorgesehen ist, das in dem Notbetrieb die Verfahrgeschwindigkeit wenigstens eines der Antriebe auf einen fest vorgegebenen Maximalwert begrenzt.

Erfindungsgemäß ist zudem ein Steuerventil vorgesehen, welches mit den hydraulischen Arbeitsleitungen eines Antriebs zu dessen Ansteuerung verbunden ist, wobei das Steuerventil im Normalbetrieb über die Steuereinrichtung angesteuert wird, welche die Verstellung des Mastsegments derart begrenzt, dass eine vorgegebene, insbesondere maximal zulässige, Verfahrgeschwindigkeit nicht überschritten wird. Ein derart ausgestaltetes Steuerventil stellt auf einfache Weise sicher, dass eine von der Steuereinrichtung vorgegebene Verfahrgeschwindigkeit für die Verstellung des Mastsegmentes im Normalbetrieb nicht überschritten wird. Hierzu regelt das Steuerventil den Zu- und Abfluss von Hydraulikflüssigkeit in den gesteuerten Antrieb über die mit dem Antrieb verbundenen hydraulischen Arbeitsleitungen.

Erfindungsgemäß ist weiterhin vorgesehen, dass das Begrenzungsmittel als ein parallel zu dem Steuerventil geschaltetes Notventil ausgestaltet ist. Ein solches parallel geschaltetes Notventil kann zur manuellen Steuerung des Antriebs im Notbetrieb verwendet werden, falls das Steuerventil sich nicht mehr zuverlässig steuern lässt.

Erfindungsgemäß ist zudem vorgesehen, dass das Notventil für die Schaltung im Notbetrieb betätigbare Handhebel aufweist. Mit diesen Handhebeln ist eine einfache manuelle Steuerung des Notventils möglich.

Die durch die Erfindung erreichten Vorteile ergeben sich daraus, dass die maximal zulässige Geschwindigkeit der Mastbewegung im Normalbetrieb optimal ausgenutzt werden kann und im Notbetrieb die maximal zulässige Geschwindigkeit der Mastbewegung ebenfalls nicht überschritten wird.

Das im Notbetrieb wirksame Begrenzungsmittel begrenzt die Verfahrgeschwindigkeit wenigstens eines Antriebes derart auf einen fest vorgegebenen Maximalwert, dass die Geschwindigkeit der Mastbewegung im Notbetrieb auch bei manueller Ansteuerung des Antriebs nicht die gesetzlichen Vorgaben überschreitet.

Dies ist von entscheidender Bedeutung, da die Antriebe für die erfindungsgemäße Ausnutzung der maximal zulässigen Geschwindigkeit der Mastbewegung im Normalbetrieb ausgelegt sind. Das bedeutet, dass bei manueller Steuerung der Antriebe der Mastsegmente, d.h. ohne elektronische Steuerung der Verfahrgeschwindigkeit durch die Steuereinrichtung, prinzipiell Mastgeschwindigkeiten erreichbar sind, die deutlich über dem gesetzlich Zulässigen liegen. Um eine solche Überschreitung im Notbetrieb zu verhindern, begrenzt erfindungsgemäß das nur im Notbetrieb wirksame Begrenzungsmittel die Verfahrgeschwindigkeit wenigstens eines Antriebes auf einen fest vorgegebenen Maximalwert. Auf diese Weise kann mit einfachen Maßnahmen verhindert werden, dass bei Ausfall der elektronischen Steuereinrichtung oder der Mastsensorik bei manueller Steuerung des Mastes die Geschwindigkeit der Mastbewegung das gesetzlich zulässige Maß überschreitet.

Vorteilhafte Ausgestaltungen und Weiterbildungen der Erfindung ergeben sich aus den Unteransprüchen.

Das Notventil sieht bevorzugt eine Begrenzung der maximal möglichen Durchflussmenge des Hydraulikfluids gegenüber dem Normalbetrieb vor, um dadurch die Verfahrgeschwindigkeit entsprechend zu begrenzen. Die für alle Antriebe des Knickmastes entsprechend vorgesehenen Notventile können zusätzlich elektrisch angesteuert werden, wozu eine von der für den Normalbetrieb vorgesehenen Maststeuerung separate, elektrische Notsteuerung vorgesehen sein kann. Durch einfaches elektrisch gesteuertes Ein- und Ausschalten der Notventile kann der Mast im Notbetrieb noch langsam verfahren werden.

Eine bevorzugte Ausführung sieht vor, dass ein weiteres, dem Steuerventil und/oder dem Notventil parallel geschaltetes, Schnellgangventil vorgesehen ist, welches für eine besonders schnelle Verstellung des entsprechenden Mastsegments zur Verfügung steht. Ein solches Schnellgangventil kann im Normalbetrieb eine ausreichend hohe Durchflussmenge gewährleisten, sodass die Verfahrgeschwindigkeit des Antriebs die Ausnutzung der maximal zulässigen Geschwindigkeit für die Mastbewegung ermöglicht.

Gemäß einer vorteilhaften Ausgestaltung ist vorgesehen, dass die Steuereinrichtung im Normalbetrieb weiter dazu eingerichtet ist, die sich aus dem Fahrbefehl, den Mastsegmentlängen und dem Ausgangssignal der Mastsensorik ergebende Geschwindigkeit der Spitze des Knickmastes zu bestimmen.

Eine vorteilhafte Ausführungsform sieht vor, dass die Steuereinrichtung im Normalbetrieb weiter dazu eingerichtet ist, die Geschwindigkeitsvorgaben der einzelnen Antriebe gegenüber dem Fahrbefehl zu reduzieren, sobald der Fahrbefehl zu einer Überschreitung der Geschwindigkeit der Spitze des Knickmastes über einen vorgegebenen Grenzwert führen würde.

Gemäß einer vorteilhaften Ausgestaltung ist vorgesehen, dass die Steuereinrichtung eingerichtet ist, die Geschwindigkeit der Spitze des Knickmastes im Normalbetrieb durch Ansteuerung der Antriebe auf einen Wert zu regeln, der kleiner oder gleich dem vorgegebenen Grenzwert ist.

Bei einer möglichen Ausgestaltung reduziert die Steuereinrichtung die Geschwindigkeiten aller Antriebe gegenüber dem Fahrbefehl um denselben Faktor, sodass die Geschwindigkeit der Spitze des Knickmastes stets kleiner oder gleich dem vorgegebenen Grenzwert ist, und zwar unabhängig von der momentanen Maststellung, die sich aus den sensorisch erfassten Schwenkwinkeln der Knickgelenke ergibt.

Bei einer weiter bevorzugten Ausgestaltung ist die Steuereinrichtung dazu ausgelegt, den Fahrbefehl, d.h. die Sollgeschwindigkeiten der einzelnen Antriebe, aus einem Bediensignal abzuleiten, das die Sollbewegung der Spitze des Knickmastes vorgibt. Dies ist im Zusammenhang mit einer sogenannten kartesischen oder zylindrischen Steuerung des Knickmastes zu sehen, bei der der Bediener mittels der Fernsteuerung nicht die Verfahrgeschwindigkeiten der einzelnen Antriebe vorgibt, sondern direkt die Bewegung der Mastspitze kontrolliert. Aus diesem Bediensignal kann die Steuereinrichtung des erfindungsgemäßen Großmanipulators die Sollgeschwindigkeiten der einzelnen Antriebe ableiten und regeln und dabei für die Einhaltung der Geschwindigkeitsgrenzen der Mastbewegung in allen Maststellungen automatisch Sorge tragen. Gemäß der Erfindung werden bei dieser kartesischen oder zylindrischen Steuerung gegenüber dem Stand der Technik im Normalbetrieb höhere Geschwindigkeiten der einzelnen Antriebe zugelassen. Dies ist insbesondere von Vorteil, wenn sich der Mast in der Nähe sogenannter singulärer Stellungen befindet, an denen höhere Geschwindigkeiten der einzelnen Antriebe für eine präzise Umsetzung der Bewegungsvorgabe für die Mastspitze erforderlich sind. Dies ist beispielsweise bei einem vollständig ausgestreckten Mast der Fall, wenn vom Benutzer eine Bewegung der Mastspitze vorgegeben wird, bei welcher der horizontale Abstand der Mastspitze zum Drehschemel bei gleichzeitiger Beibehaltung der Höhe der Mastspitze verringert werden soll. Die Erfindung ermöglicht somit in der Nähe dieser singulären Stellungen eine wesentliche Verbesserung des Verhaltens des Systems mit kartesischer oder zylindrischer Maststeuerung.

Eine bevorzugte Ausführung sieht vor, dass die Steuereinrichtung dazu eingerichtet ist, die kinetische Energie des Knickmastes zu ermitteln und die Mastgeschwindigkeit so zu begrenzen, dass eine maximale kinetische Energie des Knickmastes bei seiner Bewegung nicht überschritten wird. Mit dieser Maßnahme wird verhindert, dass es bei einer abrupten Beschleunigung oder Verzögerung der Mastbewegung zu einer mechanischen Überlastung des Knickmastes kommt.

Ferner kann zur Vermeidung einer mechanischen Überlastung des Knickmastes die Steuereinrichtung eine Rampensteuerung für die Geschwindigkeit, ggfs. in Verbindung mit einer Schwingungsdämpfung, umfassen. Hierdurch kann die Beschleunigung bzw. das Abbremsen der Knickmastbewegung begrenzt werden.

Die Erfindung ermöglicht es an einzelnen Knickgelenken des Knickmastes höhere Verfahrgeschwindigkeiten zuzulassen, so dass der gesetzlich vorgegebene Rahmen für die Mastgeschwindigkeit gegenüber dem Stand der Technik besser ausgenutzt werden kann. Die sensorische Erfassung der Maststellung und die Ableitung der Mastkinematik aus den Schwenkwinkeln ist dabei Grundlage einer Regelung der Verfahrgeschwindigkeiten der Antriebe, bei der stets die Einhaltung der gesetzlichen Geschwindigkeitsbeschränkung sichergestellt ist. Gleichzeitig kann der Knickmast im Normalbetrieb in den meisten praktischen Situationen deutlich schneller verfahren werden als bei den aus dem Stand der Technik bekannten Großmanipulatoren. Beim Aus- und Einfalten des Knickmastes ergeben sich dadurch große zeitliche Vorteile gegenüber den bisher bekannten Systemen.

Bei dem erfindungsgemäßen Verfahren wird die Geschwindigkeit der Mastbewegung in einem Normalbetrieb in Abhängigkeit von den momentanen Ausgangssignalen der Maststensorik begrenzt, wobei die einzelnen Antriebe der Knickgelenke im Normalbetrieb nach Maßgabe eines Fahrbefehls proportional gesteuert werden, wobei der Fahrbefehl die Sollgeschwindigkeiten der Antriebe vorgibt, wobei die sich aus dem Fahrbefehl, den Mastsegmentlängen und dem Ausgangssignal der Mastsensorik ergebende Geschwindigkeit der Spitze des Knickmastes bestimmt wird, wobei die Geschwindigkeitsvorgaben der einzelnen Antriebe gegenüber dem Fahrbefehl reduziert werden, sobald der Fahrbefehl zu einer Überschreitung der Geschwindigkeit der Spitze des Knickmastes über einen vorgegebenen Grenzwert führen würde, wobei die Geschwindigkeiten aller Antriebe gegenüber dem Fahrbefehl um denselben Faktor reduziert wird, sodass die Geschwindigkeit der Spitze des Knickmastes stets kleiner oder gleich dem vorgegebenen Grenzwert ist, und zwar unabhängig von der momentanen Maststellung, die sich aus den sensorisch erfassten Schwenkwinkeln der Knickgelenke ergibt, wobei die Geschwindigkeit der Mastbewegung in einem Notbetrieb begrenzt wird, indem die Verfahrgeschwindigkeit wenigstens eines der Antriebe auf einen fest vorgegebenen Maximalwert begrenzt wird. Bei dem erfindungsgemäßen Verfahren wird also die Geschwindigkeit der Mastbewegung in einem Normalbetrieb begrenzt, indem die Verfahrgeschwindigkeit wenigstens eines der Antriebe auf einen variablen, von den momentanen Ausgangssignalen der Mastsensorik abhängigen Maximalwert begrenzt wird, wobei die Geschwindigkeit der Mastbewegung in einem Notbetrieb begrenzt wird, indem die Verfahrgeschwindigkeit wenigstens eines der Antriebe auf einen fest vorgegebenen Maximalwert begrenzt wird.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen rein schematisch dargestellt und werden nachfolgend näher beschrieben. Einander entsprechende Gegenstände oder Elemente sind in allen Figuren mit den gleichen Bezugszeichen versehen. Es zeigt

Figur 1:
erfindungsgemäßer Großmanipulator mit Knickmast in einer Ausgestaltung,
Figur 2a:
Steuerventil,
Figur 2b:
Steuerventil mit Handhebel (nicht Gegenstand der Erfindung),
Figur 3:
Steuerventil mit elektrischer Notsteuerung (nicht Gegenstand der Erfindung),

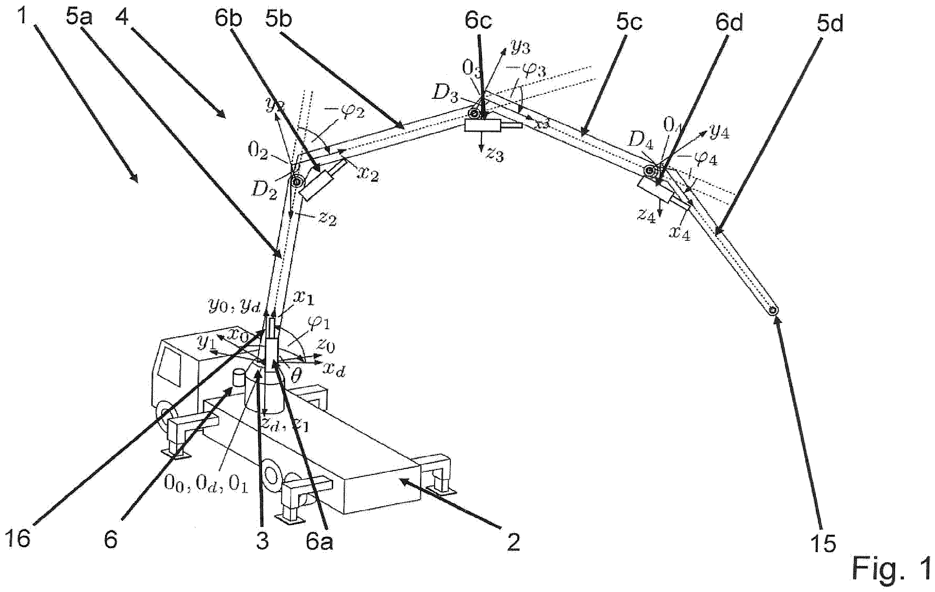

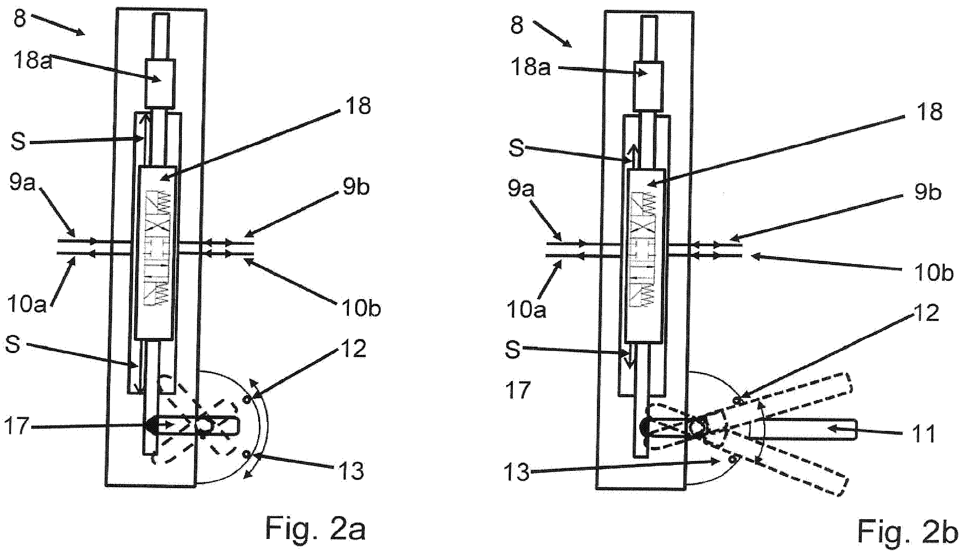

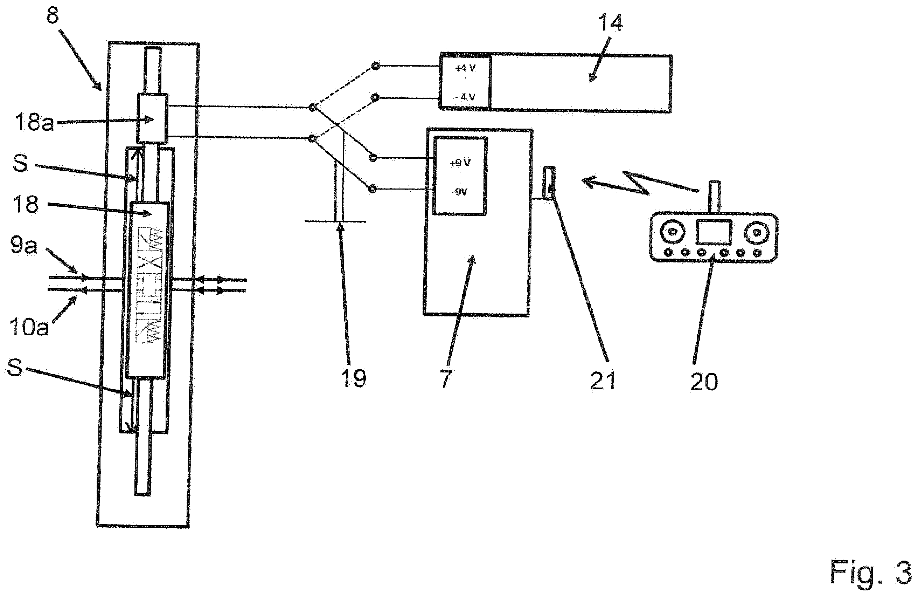

Die Darstellung gemäß Figur 1 zeigt schematisch einen als Autobetonpumpe ausgeführten Großmanipulator 1 mit einem Fahrgestell 2 auf dem ein Drehschemel 3 angeordnet ist, der mittels eines hydraulischen Drehantriebs 6 um eine Hochachse 16 des Großmanipulators 1 drehbar ist. An dem Drehschemel 3 ist ein insgesamt mit der Bezugsziffer 4 bezeichneter Knickmast 4 angelenkt, der bei dem dargestellten Ausführungsbeispiel vier Mastsegmente 5a, 5b, 5c und 5d umfasst. Das erste Mastsegment 5a ist an dem Drehschemel 3 über ein Gelenk um eine horizontale Achse schwenkbeweglich angebracht. Die Schwenkbewegung wird durch einen Schwenkantrieb 6a bewirkt. Die übrigen Mastsegmente 5b, 5c und 5d sind mit den jeweils benachbarten Mastsegmenten 5a, 5b, 5c, 5d über Knickgelenke um zueinander parallele, horizontale Achsen schwenkbeweglich verbunden. Die Schwenkbewegung bewirkt ebenfalls jeweils ein Schwenkantrieb 6a, 6b, 6c, 6d. Die Schwenkantriebe 6a, 6b, 6c, 6d weisen jeweils einen (oder mehrere) Hydraulikzylinder auf, die über proportional arbeitende Steuerventile 8 (Fig. 2a, 2b, 3) angesteuert werden. Diese wiederum werden von einer elektronischen Steuereinrichtung 7 (Fig. 3) für die Mastbewegung gesteuert.

Der erfindungsgemäße Großmanipulator 1 weist eine Mastsensorik (z.B. in Form von Winkelsensoren für die Gelenke, Wegsensoren zur Erfassung der Kolbenpositionen der einzelnen Hydraulikzylinder oder geodätische Neigungssensoren) auf. Mithilfe der Mastsensorik werden beispielsweise die Schwenkwinkel $\phi_1$, $\phi_2$, $\phi_3$ und $\phi_4$ der Knickgelenke erfasst, wobei die Steuereinrichtung 7 (Fig. 3) im Normalbetrieb durch entsprechende Ansteuerung der Steuerventile 8 (Fig. 2a, 2b, 3) der Hydraulikzylinder die Geschwindigkeit der Mastbewegung abhängig von den momentanen Schwenkwinkeln $\phi_1$, $\phi_2$, $\phi_3$ und $\phi_4$ der Knickgelenke steuert. Eine die Antriebe 6, 6a, 6b, 6c, 6d in einem Normalbetrieb ansteuernde Steuereinrichtung 7 (Fig. 3) ist dazu eingerichtet die Mastbewegung des Knickmastes 4 zu steuern. Hierzu wird im Normalbetrieb über die Mastsensorik die Lage mindestens eines Punktes des Knickmastes 4 oder ein Schwenkwinkels $\phi 1$, $\phi 2$, $\phi 3$, $\phi 4$ zumindest eines Knickgelenks erfasst. Im Normalbetrieb wird die Geschwindigkeit der Mastbewegung durch die Steuereinrichtung 7 (Fig. 3) in Abhängigkeit von den momentanen Ausgangssignalen der Mastsensorik begrenzt. Dies geschieht insbesondere, indem die Verfahrgeschwindigkeit wenigstens eines der Antriebe 6, 6a, 6b, 6c 6d auf einen variablen, von den momentanen Ausgangssignalen der Mastsensorik abhängigen Maximalwert begrenzt wird. Im Notbetrieb, etwa bei Ausfall der Mastsensorik oder anderer elektronische Komponenten, sind die Antriebe 6, 6a, 6b, 6c, 6d manuell steuerbar. Für den Notbetrieb ist wenigstens ein Begrenzungsmittel 11, 12, 13, 14 (Fig. 2a, 2b, 3) vorgesehen, das die Verfahrgeschwindigkeit wenigstens eines der Antriebe 6, 6a, 6b, 6c, 6d auf einen fest vorgegebenen Maximalwert begrenzt.

Dieser, für die einzelnen Antriebe 6, 6a, 6b, 6c, 6d fest vorgegebene, Maximalwert, ist so ausgelegt, dass auch bei gleichzeitigem Verfahren aller Antriebe 6, 6a, 6b, 6c, 6d die maximal zulässige Geschwindigkeit der Mastbewegung nicht überschritten werden kann. Falls im Notbetrieb der zeitgleiche Betrieb mehrerer Antriebe 6, 6a, 6b, 6c, 6d nicht möglich ist können die Begrenzungsmittel so ausgelegt sein, dass bei dem Verfahren des ausgewählten Antriebes 6, 6a, 6b, 6c, 6d, die zulässige Geschwindigkeit der Mastbewegung nicht überschritten wird.

Die Figur 2a zeigt schematisch ein Steuerventil 8, welches mit den hydraulischen Arbeitsleitungen 9b, 10b zur Ansteuerung eines Antriebes 6, 6a, 6b, 6c, 6d (Fig.1) verbunden ist. Jedem der Antriebe 6, 6a, 6b, 6c, 6d (Fig.1) ist ein eigenes Steuerventil 8 zugeordnet. Über die hydraulischen Arbeitsleitungen 9a, 10a ist das Steuerventil 8 mit einer nicht dargestellten Hydraulikpumpe verbunden, die den für das Verfahren des Knickmastes notwendigen Hydraulikdruck bzw. das notwendige Hydraulikmittelvolumen bereitstellt. Der Antrieb 6, 6a, 6b, 6c, 6d (Fig. 1) wird über die hydraulischen Arbeitsleitungen 9b, 10b vom Steuerventil 8 mit Hydraulikdruck versorgt, sodass der Antrieb 6a, 6b, 6c, 6d (Fig. 1) die Mastsegmente 5a, 5b, 5c, 5d (Fig. 1) über das Knickgelenk gegeneinander verschwenkt bzw. der Antrieb 6 eine Drehbewegung des Knickmastes 4 bewirkt. Das Steuerventil 8 wird im Normalbetrieb über die Steuereinrichtung 7 (Fig. 3) angesteuert, um die Mastbewegung des Knickmastes 4 durch die Betätigung des Ventilkolbens 18 mittels der Ventilkolbensteuereinrichtung 18a zu bewirken. Die elektronische Ansteuerung des Steuerventils 8, kann wie in Fig. 3 gezeigt, über ein variables Spannungssignal aber beispielsweise auch über ein elektronisches Digitalsignal erfolgen. Die Steuereinrichtung 7 (Fig. 3) begrenzt die Verstellung des Mastsegments 5a, 5b, 5c, 5d (Fig. 1) im Knickgelenk bzw. im Drehschemel 3 derart, dass die Geschwindigkeit der Mastbewegung in Abhängigkeit von den momentanen Ausgangssignalen der Mastsensorik begrenzt wird. Dies geschieht insbesondere, indem die Verfahrgeschwindigkeit des Antriebes 6, 6a, 6b, 6c 6d (Fig. 1) auf einen variablen, von den momentanen Ausgangssignalen der Mastsensorik abhängigen Maximalwert begrenzt wird. Auf diese Weise kann die Steuereinrichtung 7 (Fig. 3) die Geschwindigkeit der Mastbewegung begrenzen, sodass eine vorgegebene Mastgeschwindigkeit nicht überschritten wird.

Der Ventilkolben 18 des als Proportionalventil ausgeführten Steuerventils 8 gemäß Figur 2a weist einen durch zwei vertikale Pfeile angedeuteten Stellweg S auf. Um die Verfahrgeschwindigkeit des Antriebes 6, 6a, 6b, 6c, 6d (Fig. 1) im Notbetrieb auf einen fest vorgegebenen Maximalwert zu begrenzen, kann eine mechanische Begrenzung des Stellweges S vorgesehen sein, die nicht Gegenstand der Erfindung ist. Diese mechanische Begrenzung ist in Figur 2b dargestellt. Im Notbetrieb wird auf den Sockel 17 ein Handhebel 11 aufgesteckt. Dieser Handhebel 11 ist dann im Notbetrieb zwischen den beiden Anschlägen 12, 13 verstellbar, wobei die Anschläge 12, 13 die Verstellung mechanisch begrenzen. Dies ist in Figur 2b durch die gestrichelt dargestellten Handhebel 11 in den beiden Anschlagspositionen angedeutet. Durch die Verstellung des Handhebels 11 ist der Antrieb 6, 6a, 6b, 6c, 6d (Fig. 1) über das Steuerventil 8 im Notbetrieb manuell steuerbar. Wie in Figur 2a zu erkennen ist, kontaktiert der nicht aufgesteckte Handhebel die Anschläge 12, 13 im Normalbetrieb nicht, sodass der Stellweg S des Steuerventils 8 hier nicht mechanisch begrenzt ist. Somit ist im Normalbetrieb an dem Steuerventil 8 die Verstellung über den vollen Kolbenweg möglich. Hierdurch erfolgt eine ungehinderte Ansteuerung des Ventilkolbens 18 des Steuerventils 8 über die elektronische oder hydraulische Ventilkolbenbetätigungseinrichtung 18a durch die Steuereinrichtung 7 (Fig. 3) zur Verstellung des Mastsegments 5a, 5b, 5c, 5d (Fig. 1) im Normalbetrieb. Im Normalbetrieb ist der Sockel 17 etwa um 80 Grad verschwenkbar, was durch die gestrichelten Umrisse angedeutet ist, während die Begrenzung im nicht erfindungsgemäßen Notbetrieb durch die Anschläge 12, 13 an der Kulisse einen Schwenkwinkel des Handhebels 11 von etwa 40 Grad zulässt. Im nicht erfindungsgemäßen Notbetrieb ist die elektronische oder hydraulische Ventilkolbenbetätigungseinrichtung 18a außer Funktion. Im nicht erfindungsgemäßen Notbetrieb kann beispielsweise nur ein Steuerventil 8 für die Antriebe 6, 6a, 6b, 6c, 6d mit einem einzigen Handhebel angesteuert werden, so dass ein gleichzeitiges Verfahren mehrerer Antriebe 6, 6a, 6b, 6c, 6d nicht möglich ist. In diesem Fall ist die Begrenzung so ausgelegt, dass die maximal zulässige Mastbewegungsgeschwindigkeit bei der Ansteuerung eines Antriebes 6, 6a, 6b, 6c, 6d nicht möglich ist.

Bei dem gezeigten Steuerventil 8 kann es sich um ein 4/3-Wege-Proportionalventil handeln, mit dem der Hydraulikzylinder direkt angesteuert wird. Das Steuerventil 8 kann auch als Pilot- bzw. Vorsteuerventil zur Ansteuerung eines 4/3-Wege-Proportionalventils ausgebildet sein.

In Figur 3 ist ein als Proportionalventil ausgebildetes Steuerventil 8 gezeigt. Der Stellweg S des Ventilkolbens 18 ist durch die zwei vertikalen Pfeile angedeutet. Die Verstellung des Ventilkolbens 18 auf dem Stellweg S erfolgt über die elektrische Ventilkolbenbetätigungseinrichtung 18a. Die Ventilkolbenbetätigungseinrichtung 18a wird im Normalbetrieb über die Steuereinrichtung 7 angesteuert, die Fahrbefehle vom Benutzer des Großmanipulators 1 (Fig. 1) mittels der Fernsteuerung 20 und dem Empfänger 21 erhält. Im nicht erfindungsgemäßen Notbetrieb ist ein Mittel zur elektronischen Begrenzung des Stellweges S vorgesehen. Hierdurch kann die Verfahrgeschwindigkeit des Antriebes 6, 6a, 6b, 6c, 6d (Fig. 1) auf einen fest vorgegebenen Maximalwert begrenzt werden. Im gezeigten Ausführungsbeispiel, das nicht Gegenstand der Erfindung ist, ist die elektrische Begrenzung durch eine im Notbetrieb verwendete Notsteuerung 14 gewährleistet. Diese Notsteuerung 14 stellt eine gegenüber der im Normalbetrieb durch die Steuereinrichtung 7 zur Verfügung gestellte, reduzierte elektrische Spannung zur Ansteuerung der Ventilkolbenbetätigungseinrichtung 18a zur Verfügung. Durch die reduzierte Spannung der Notsteuerung 14 wird der Stellweg S des Steuerventils 8 im Notbetrieb begrenzt, sodass die Verfahrgeschwindigkeit des Antriebes 6, 6a, 6b, 6c, 6d (Fig. 1) auf einen fest vorgegebenen Maximalwert begrenzt ist. Im Normalbetrieb stellt die Steuereinrichtung 7 zur Ansteuerung des Steuerventils 8 eine Spannung zwischen -9 V und +9 V zur Verfügung, sodass der Ventilkolben 18 durch die Ventilkolbenbetätigungseinrichtung 18a über den vollen Kolbenweg verfahren werden kann. Zur Umschaltung zwischen Normalbetrieb und nicht erfindungsgemäßen Notbetrieb ist ein Umschalter 19 vorgesehen. Die Betätigung dieses Umschalters 19 führt dazu, dass der Knickmast 4 (Fig. 1) im nicht erfindungsgemäßen Notbetrieb über die elektrische Notsteuerung verfahren werden kann. Die Notsteuerung 14 stellt hierzu eine fest eingestellte reduzierte Spannung von beispielsweise +4 V und -4V zur Ansteuerung des Steuerventils 8 über die Ventilkolbenbetätigungseinrichtung 18a zur Verfügung wodurch der Stellweg des Steuerventils 8 entsprechend verkürzt wird. Die Spannung der Notsteuerung zur Ansteuerung der Steuerventile 8 kann aber auch von -4 V bis +4 V regelbar sein. Auf diese Weise kann sichergestellt werden, dass die Verfahrgeschwindigkeit des Antriebes 6, 6a, 6b, 6c, 6d (Fig. 1) im Notbetrieb auf einen fest vorgegebenen Maximalwert begrenzt ist. Bei dem gezeigten Steuerventil 8 kann es sich um ein 4/3-Wege-Proportionalventil handeln, mit dem der Hydraulikzylinder direkt angesteuert wird. Das Steuerventil 8 kann jedoch auch als Pilot- oder Vorsteuerventil zur Ansteuerung eines 4/3-Wege-Proportionalventils ausgebildet sein.

Falls über die Notsteuerung 14 mehrere Steuerventile 8, bzw. Antriebe 6, 6a, 6b, 6c, 6d gleichzeitig gesteuert werden können, kann die Begrenzung beispielsweise so ausgelegt sein, dass bei gleichzeitiger Verfahrbewegung mehrerer der Antriebe 6, 6a, 6b, 6c, 6d die maximal zulässige Geschwindigkeit der Mastbewegung nicht überschritten wird.

Im Folgenden wird ein Ausführungsbeispiel eines Algorithmus zur Maststeuerung im Normalbetrieb anhand eines Knickmastes eines Großmanipulators im Einzelnen erläutert, welcher eine beliebige Anzahl von N Gelenken aufweist und mit einem Drehschemel 3 an einem festen Punkt auf dem Fahrgestell 2 verankert ist. Figur 1 zeigt repräsentativ den Fall einer Autobetonpumpe 1 mit einem $N = 4$ Gelenke aufweisenden Knickmast 4. Die elastische Deformation der einzelnen Mastsegmente 5a, 5b, 5c, 5d wird vernachlässigt, so dass diese als Starrkörper betrachtet werden. Zur Bestimmung der Geschwindigkeit des Endpunktes EP des Knickmastes 4, der im Folgenden der Mastspitze 15 entspricht, ist die Beschreibung der Kinematik des Systems erforderlich. Die Freiheitsgrade des Systems sind die Starrkörperwinkel $\phi_i$ für $i = 1, \ldots, N$ sowie der Drehwinkel $\theta$ des Drehschemels 3 um dessen vertikale Drehachse. Die Absolutbewegungen des Systems werden im Inertialkoordinatensystem $0_0 x_0 y_0 z_0$, d.h. in dem bezüglich des Fahrgestells 2 festen Koordinatensystem beschrieben. Mit $O_d x_d y_d z_d$ wird jenes Koordinatensystem bezeichnet, welches gegenüber dem Inertialkoordinatensystem um den Drehwinkel $\theta$ verdreht ist. Des Weiteren wird für jedes Mastsegment 5a, 5b, 5c, 5d ein lokales Koordinatensystem $0_i x_i y_i z_i$ definiert, dessen $x_i$-Achse entlang der Längsachse des jeweiligen Mastsegments 5a, 5b, 5c, 5d verläuft. Da die Mastsegmente für $i \geq 2$ am Beginn typischerweise einen Knick aufweisen, schneidet deren Längsachse nicht die jeweilige Gelenkachse. Der Ursprung jedes lokalen Koordinatensystems wird daher auf den Schnittpunkt der Längsachse mit jener orthogonalen Geraden gelegt, welche durch die Gelenkachse verläuft. Die Abstände zwischen den Gelenkachsen und den Ursprüngen der lokalen Koordinatensysteme werden mit $D_i$ für 7 = 2, ..., N bezeichnet.

Die kinematischen Beziehungen zwischen den lokalen Koordinatensystemen und dem Inertialkoordinatensystem können mit Rotationsmatrizen und Translationsvektoren dargestellt werden. Die Inertialkoordinaten eines Punktes auf der Längsachse des $i$-ten Mastsegments

$$\mathbf{r}_i^i(x_i) = [\bar{x}_i, 0, 0]^T,$$

beschrieben im lokalen Koordinatensystem $i$ (gekennzeichnet durch den unteren Index), sind durch

$$\mathbf{r}_0^i(x_i) = \mathbf{R}_0^i \mathbf{r}_i^i(x_i) + \mathbf{d}_0^i$$

gegeben. Die Matrix

$$\mathbf{R}_0^i = \mathbf{R}_0^d \mathbf{R}_d^1 \mathbf{R}_1^2 \ldots \mathbf{R}_{i-1}^i$$

mit

$$\mathbf{R}_0^d = \begin{bmatrix} \cos(\theta) & 0 & -\sin(\theta) \\ 0 & 1 & 0 \\ \sin(\theta) & 0 & \cos(\theta) \end{bmatrix},$$

$$\mathbf{R}_d^1 = \begin{bmatrix} \cos(\varphi_1) & -\sin(\varphi_1) & 0 \\ \sin(\varphi_1) & \cos(\varphi_1) & 0 \\ 0 & 0 & 1 \end{bmatrix}$$

und

$$\mathbf{R}_{j-1}^j = \begin{bmatrix} \cos(\varphi_j) & -\sin(\varphi_j) & 0 \\ \sin(\varphi_j) & \cos(\varphi_j) & 0 \\ 0 & 0 & 1 \end{bmatrix}$$

für $j = 2, \ldots, N$ beschreibt die Verdrehung des lokalen Koordinatensystems $0_i x_i y_i z_i$ gegenüber dem Inertialkoordinatensystem $0_0 x_0 y_0 z_0$. Die translatorische Verschiebung $\mathbf{d}_0^i$ zwischen dem lokalen Koordinatensystem $0_i x_i y_i z_i$ und dem Inertialkoordinatensystem $Ooxoyozo$ ist durch

$$\mathbf{d}_0^j = \mathbf{R}_0^{j-1}\mathbf{d}_{j-1}^j + \mathbf{d}_0^{j-1},$$

für $j = 2, \ldots, N$ mit $\mathbf{d}^1_0 = [0, 0, 0]^{\mathsf{T}}$, und

$$\mathbf{d}_{j-1}^j = \mathbf{R}_{j-1}^j \begin{bmatrix} 0 \\ D_j \\ 0 \end{bmatrix} + \begin{bmatrix} L_{j-1} \\ 0 \\ 0 \end{bmatrix}$$

gegeben. Dabei bezeichnet $L_j$ die Länge des $j$-ten Mastsegments.

Die Inertialkoordinaten des Endpunkts EP des N-ten Mastsegments können somit als Funktion der Stellungen der N Gelenke und des Drehschemels 3 durch $\mathbf{r}_{0,N}^{EP}(\mathbf{q}) = \mathbf{r}_0^N(L_N)$ mit dem Vektor der Freiheitsgrade $\mathbf{q} = [\theta, \phi_1, \ldots, \phi N]^T$ dargestellt werden. Die Geschwindigkeit des Endpunktes EP in Richtung der einzelnen Koordinatenachsen ergibt sich durch Differentiation nach der Zeit zu

$$\dot{\mathbf{r}}_{0,N}^{EP}(\mathbf{q}) = \frac{\partial \mathbf{r}_{0,N}^{EP}(\mathbf{q})}{\partial \mathbf{q}}\dot{\mathbf{q}} = \mathbf{J}_{\mathbf{q},N}^{EP}\dot{\mathbf{q}}$$

Durch die eingesetzten Hydrauliksysteme in Kombination mit der Steuereinrichtung wird dem Bediener des erfindungsgemäßen Großmanipulators eine proportionale Steuerung der Verfahrgeschwindigkeiten der einzelnen Hydraulikzylinder 6a, 6b, 6c, 6d und des Drehantriebes 6 ermöglicht. Die resultierenden Gelenkwinkelgeschwindigkeiten können bei Kenntnis der Übersetzung der Gelenkkinematiken anhand der Sollgeschwindigkeiten für die Hydraulikzylinder 6a, 6b, 6c, 6d bestimmt werden. Die Kolbenposition $s_{z,i}$ eines Zylinders 6a, 6b, 6c, 6d lässt sich allgemein als nichtlineare Funktion des entsprechenden Gelenkwinkels $\phi_i$ darstellen,

$$s_{z,i} = f_{z,i}(\varphi_i)$$

Auf Geschwindigkeitsebene gilt der Zusammenhang

$$\dot{s}_{z,i} = \frac{\partial f_{z,i}(\varphi_i)}{\partial \varphi_i}\dot{\varphi}_i$$

womit aus einer vorgegeben Kolbengeschwindigkeit $\dot{s}_{z,i}^d$ die resultierende Gelenkwinkelgeschwindigkeit bestimmt werden kann. Des Weiteren kann mit diesem Zusammenhang umgekehrt aus einer vorgegebenen Gelenkwinkelgeschwindigkeit die entsprechende Kolbengeschwindigkeit berechnet werden. Damit wird dem Benutzer eine gleichmäßige, proportionale Steuerung der Gelenkwinkelgeschwindigkeiten ermöglicht. Dies ist für den Benutzer von besonderem Vorteil, da dadurch die im Allgemeinen nicht vermeidbare Nichtlinearität der Gelenkskinematik kompensiert wird. Der Vektor

$$\dot{\mathbf{q}} = [\dot{\theta}^d, \dot{\varphi}_1^d, \ldots, \dot{\varphi}_N^d]^T$$

ist deshalb repräsentativ für die Benutzereingaben, d.h. den Fahrbefehl, der die Sollgeschwindigkeiten der Antriebe oder direkt der Gelenke vorgibt. Für die Erfassung der Gelenkstellungen bzw. der Freiheitsgrade $\mathbf{q}$ ist der Einsatz einer geeigneten Mastsensorik erforderlich.

Die Absolutgeschwindigkeit der Auslegerspitze EP ist durch

$$v^{EP} = \sqrt{\dot{\mathbf{q}}^T\left(\mathbf{J}_{\mathbf{q},N}^{EP}\right)^T\mathbf{J}_{\mathbf{q},N}^{EP}\dot{\mathbf{q}}}$$

gegeben. Überschreitet diese die maximal erlaubte Geschwindigkeit $v^{EP}_{max}$, werden alle Geschwindigkeiten der Antriebe 6, 6a, 6b, 6c, 6d durch die Steuereinrichtung gegenüber den durch den Fahrbefehl vorgegebenen Sollgeschwindigkeiten gleichmäßig, d.h. um denselben Faktor reduziert. Es wird damit ein Vektor $\dot{\mathbf{q}}_{red}$ gesucht, für den

$$v^{EP}_{max} = \sqrt{\dot{\mathbf{q}}^T_{red} \left(\mathbf{J}^{EP}_{\mathbf{q},N}\right)^T \mathbf{J}^{EP}_{\mathbf{q},N} \dot{\mathbf{q}}_{red}}$$

gilt. Durch die Forderung nach der gleichmäßigen Reduktion der Geschwindigkeiten lässt sich dieses Problem eindeutig lösen und auf die Bestimmung eines Faktors $k_{red} \in \mathbb{R}$ mit $\dot{\mathbf{q}}_{red} = k_{red}\dot{\mathbf{q}}$ vereinfachen. Damit gilt

$$v^{EP}_{max} = \sqrt{k^2_{red}\dot{\mathbf{q}}^T \left(\mathbf{J}^{EP}_{\mathbf{q},N}\right)^T \mathbf{J}^{EP}_{\mathbf{q},N}\dot{\mathbf{q}}} \; ,$$

woraus der Zusammenhang

$$k_{red} = \frac{v^{EP}_{max}}{\sqrt{\dot{\mathbf{q}}^T \left(\mathbf{J}^{EP}_{\mathbf{q},N}\right)^T \mathbf{J}^{EP}_{\mathbf{q},N}\dot{\mathbf{q}}}}$$

folgt. Das Ergebnis für den modifizierten Fahrbefehl $\dot{\mathbf{q}}_{red}$, d.h. mit gegenüber der bedienerseitigen Vorgabe $\dot{\mathbf{q}}$ reduzierten Geschwindigkeiten lautet schließlich

$$\dot{\mathbf{q}}_{red} = \frac{v^{EP}_{max}}{\sqrt{\dot{\mathbf{q}}^T \left(\mathbf{J}^{EP}_{\mathbf{q},N}\right)^T \mathbf{J}^{EP}_{\mathbf{q},N}\dot{\mathbf{q}}}} \dot{\mathbf{q}} \; .$$

Die Steuereinrichtung steuert den Drehantrieb 6 und die Hydraulikzylinder 6a, 6b, 6c, 6d nach Maßgabe dieses modifizierten Fahrbefehls an und begrenzt deren Bewegungsgeschwindigkeit, so dass sich die Mastspitze *EP* niemals schneller als gesetzlich erlaubt bewegt. Gleichzeitig kann in jeder beliebigen Maststellung die Verfahrgeschwindigkeit innerhalb des gesetzlichen Rahmens maximal schnell sein, wodurch erheblich Zeit beim Aus- und Einfalten des Knickmastes 4, aber auch beim Verfahren des Mastes zwischen zwei Arbeitspositionen, gegenüber dem Stand der Technik eingespart werden kann.

**Bezugszeichenliste**

| | |
|---|---|
| 1 | Großmanipulator |
| 2 | Fahrgestell |
| 3 | Drehschemel |
| 4 | Knickmast |
| 5 5a, 5b, 5c, 5d | Mastsegment |
| 6 6, 6a, 6b, 6c, 6d | Antrieb |
| 7 | Steuereinrichtung |
| 8 | Steuerventil |

| | | |
|---|---|---|
| 9 | 9a, 9b | hydraulische Arbeitsleitung |
| 10 | 10a, 10b | hydraulische Arbeitsleitung |
| 11 | | Handhebel |
| 12 | | Anschlag |
| 13 | | Anschlag |
| 14 | | elektrische Notsteuerung |
| 15 | | Mastspitze |
| 16 | | Hochachse |
| 17 | | Sockel des Handhebels |
| 18 | | Ventilkolben, 18a Ventilkolbenbetätigungseinrichtung |
| 19 | | Umschalter |
| 20 | | Fernsteuerung |
| 21 | | Empfänger |

**Patentansprüche**

1. Großmanipulator (1), insbesondere Autobetonpumpe, mit einem um eine vertikale Achse mittels eines Drehantriebs (6) drehbaren Drehschemel (3), der auf einem Fahrgestell (2) angeordnet ist, einem Knickmast (4), der zwei oder mehr Mastsegmente (5a, 5b, 5c, 5d) umfasst, wobei die Mastsegmente (5a, 5b, 5c, 5d) über Knickgelenke mit dem jeweils benachbarten Drehschemel (3) oder Mastsegment (5a, 5b, 5c, 5d) mittels je eines Antriebs (6a, 6b, 6c, 6d) schwenkbeweglich verbunden sind, mit einer die Antriebe (6, 6a, 6b, 6c, 6d) in einem Normalbetrieb ansteuernden Steuereinrichtung (7) für die Mastbewegung, und einer Mastsensorik zur Erfassung der Lage mindestens eines Punktes des Knickmastes (4) oder eines Schwenkwinkels ($\varphi_1$, $\varphi_2$, $\varphi_3$, $\varphi_4$) zumindest eines Knickgelenks, wobei die Steuereinrichtung (7) dazu eingerichtet ist, die Geschwindigkeit der Mastbewegung in Abhängigkeit von den momentanen Ausgangssignalen der Mastsensorik zu begrenzen, und einem Steuerventil (8), welches mit hydraulischen Arbeitsleitungen (9b, 10b) eines Antriebs (6, 6a, 6b, 6c, 6d) zu dessen Ansteuerung verbunden ist, wobei das Steuerventil (8) im Normalbetrieb über die Steuereinrichtung (7) angesteuert wird, welche die Verstellung des Mastsegments (5, 5a, 5b, 5c) derart begrenzt, dass eine vorgegebene Verfahrgeschwindigkeit nicht überschritten wird, **dadurch gekennzeichnet,**
**dass** die Antriebe (6, 6a, 6b, 6c, 6d) in einem Notbetrieb manuell steuerbar sind, wobei wenigstens ein Begrenzungsmittel (11, 12, 13, 14) vorgesehen ist, das in dem Notbetrieb die Verfahrgeschwindigkeit wenigstens eines der Antriebe (6, 6a, 6b, 6c, 6d) auf einen fest vorgegebenen Maximalwert begrenzt, wobei das Begrenzungsmittel als ein parallel zu dem Steuerventil (8) geschaltetes Notventil ausgestaltet ist, wobei das Notventil für die Steuerung im Notbetrieb betätigbare Handhebel aufweist.

2. Großmanipulator (1) nach Anspruch 1, **dadurch gekennzeichnet, dass** das Notventil eine Begrenzung der Durchflussmenge vorsieht.

3. Großmanipulator (1) nach Anspruch 1 oder 2, **dadurch gekennzeichnet, dass** ein weiteres dem Steuerventil (8) und/oder dem Notventil parallel geschaltetes Schnellgangventil vorgesehen ist, welches für eine schnelle Verstellung des Mastsegments (5a, 5b, 5c, 5d) zur Verfügung steht.

4. Verfahren zur Steuerung der Bewegung eines Knickmastes (4) eines Großmanipulators (1), insbesondere einer Autobetonpumpe, wobei der Knickmast (4) zwei oder mehr Mastsegmente (5, 5a, 5b, 5c) umfasst, die Mastsegmente (5, 5a, 5b, 5c) über Knickgelenke mit dem jeweils benachbarten Drehschemel (3) oder Mastsegment (5, 5a, 5b, 5c) mittels je eines Antriebs (6, 6a, 6b, 6c) schwenkbeweglich verbunden sind, wobei der Schwenkwinkel ($\varphi$1, $\varphi$2, $\varphi$3, $\varphi$4) mindestens eines Knickgelenks des Knickmastes (4) oder die Lage mindestens eines Punktes des Knickmastes (4) sensorisch erfasst werden, wobei die Geschwindigkeit der Mastbewegung in einem Normalbetrieb in Abhängigkeit von den momentanen Ausgangssignalen der Mastsensorik begrenzt wird,

**dadurch gekennzeichnet,**

**dass** die einzelnen Antriebe (6, 6a, 6b, 6c) der Knickgelenke im Normalbetrieb nach Maßgabe eines Fahrbefehls proportional gesteuert werden, wobei der Fahrbefehl die Sollgeschwindigkeiten der Antriebe (6, 6a, 6b, 6c, 6d) vorgibt, wobei die sich aus dem Fahrbefehl, den Mastsegmentlängen und dem Ausgangssignal der Mastsensorik ergebende Geschwindigkeit der Spitze (EP) des Knickmastes (4) bestimmt wird, wobei die Geschwindigkeitsvorgaben der einzelnen Antriebe (6, 6a, 6b, 6c, 6d) gegenüber dem Fahrbefehl reduziert werden, sobald der Fahrbefehl zu einer Überschreitung der Geschwindigkeit der Spitze (EP) des Knickmastes (4) über einen vorgegebenen Grenzwert führen würde, wobei die Geschwindigkeiten aller Antriebe (6, 6a, 6b, 6c, 6d) gegenüber dem Fahrbefehl um denselben Faktor reduziert wird, sodass die Geschwindigkeit der Spitze (EP) des Knickmastes (4) stets kleiner oder gleich dem vorgegebenen Grenzwert ist, und zwar unabhängig von der momentanen Maststellung, die sich aus den sensorisch erfassten Schwenkwinkeln ($\varphi$1, $\varphi$2, $\varphi$3, $\varphi$4) der Knickgelenke ergibt, wobei die Geschwindigkeit der Mastbewegung in einem Notbetrieb begrenzt wird, indem die Verfahrgeschwindigkeit wenigstens eines der Antriebe (6, 6a, 6b, 6c, 6d) auf einen fest vorgegebenen Maximalwert begrenzt wird.

## Claims

1. Large manipulator (1), in particular truck-mounted concrete pump, with a turntable (3) which can be rotated about a vertical axis by means of a rotary drive (6) and which is arranged on a chassis (2), an articulated boom (4) which comprises two or more boom segments (5a, 5b, 5c, 5d), wherein the boom segments (5a, 5b, 5c, 5d) are connected in a pivotably movable manner by way of articulation joints to the turntable (3) or boom segment (5a, 5b, 5c, 5d) which is adjacent in each case by means of one drive (6a, 6b, 6c, 6d) each, with a control device (7) for the boom movement which actuates the drives (6, 6a, 6b, 6c, 6d) in normal operation, and a boom sensor system for detecting the position of at least one point on the articulated boom (4) or a pivot angle ($\varphi_1$, $\varphi_2$, $\varphi_3$, $\varphi_4$) of at least one articulation joint, wherein the control device (7) is set up to limit the speed of the boom movement dependent upon the current output signals of the boom sensor system, and a control valve (8), which is connected to hydraulic working lines (9b, 10b) of a drive (6, 6a, 6b, 6c, 6d) for actuation of said drive, wherein the control valve (8) in normal operation is actuated by way of the control device (7) which limits the adjustment of the boom segment (5, 5a, 5b, 5c) such that a specified speed of movement is not exceeded,
**characterised in that**
the drives (6, 6a, 6b, 6c, 6d) in an emergency mode are manually controllable, wherein at least one limitation means (11, 12, 13, 14) is provided which in emergency operation limits the speed of movement of at least one of the drives (6, 6a, 6b, 6c, 6d) to a fixed maximum value, wherein the limitation means is designed as an emergency valve connected in parallel to the control valve (8), wherein the emergency valve has hand levers which can be actuated for control in emergency operation.

2. Large manipulator (1) according to Claim 1, **characterised in that** the emergency valve provides a limitation of the flow rate.

3. Large manipulator (1) according to Claim 1 or 2, **characterised in that** a further fast-action valve connected in parallel with the control valve (8) and/or the emergency valve is provided, which fast-action valve is available for rapid adjustment of the boom segment (5a, 5b, 5c, 5d).

4. Method for controlling the movement of an articulated boom (4) of a large manipulator (1), in particular a truck-mounted concrete pump, wherein the articulated boom (4) comprises two or more boom segments (5, 5a, 5b, 5c), the boom segments (5, 5a, 5b, 5c) are connected in a pivotably movable manner by way of articulation joints to the turntable (3) or boom segment (5, 5a, 5b, 5c) which is adjacent in each case by means of one drive (6, 6a, 6b, 6c) each, wherein the pivot angle ($\varphi$1, $\varphi$2, $\varphi$3, $\varphi$4) of at least one articulation joint of the articulated boom (4) or the position of at least one point on the articulated boom (4) is detected by sensors, wherein the speed of the boom movement in normal operation is limited as a function of the current output signals of the boom sensor system,
**characterised in that**
the individual drives (6, 6a, 6b, 6c) of the articulation joints are controlled proportionally in normal operation according to a drive command, wherein the drive command specifies the target speeds of the drives (6, 6a, 6b, 6c, 6d), wherein the speed of the tip (EP) of the articulated mast (4) resulting from the drive command, the mast segment lengths and the output signal of the mast sensor system is determined, wherein the speed specifications of the individual drives (6, 6a, 6b, 6c, 6d) are reduced with respect to the drive command as soon as the drive command would lead to the speed of the tip (EP) of the articulated mast (4) exceeding a predetermined threshold value, wherein the speeds of all drives (6, 6a, 6b, 6c, 6d) are reduced by the same factor with respect to the drive command so that the speed of the tip (EP) of the articulated mast (4) is always smaller than or equal to the predetermined threshold value, namely independent of the current mast position, which results from the sensorially-captured pivot angles ($\varphi 1$, $\varphi 2$, $\varphi 3$, $\varphi 4$) of the articulation joints, wherein the speed of the boom movement in an emergency mode is limited **in that** the speed of movement of at least one of the drives (6, 6a, 6b, 6c, 6d) is limited to a fixed maximum value.

**Revendications**

1. Manipulateur de grande taille (1), en particulier pompe à béton automotrice, avec un chariot de rotation (3) pouvant tourner au moyen d'un entraînement en rotation (6) autour d'un axe vertical, qui est disposé sur un châssis (2), un mât articulé (4), qui comprend deux segments de mât (5a, 5b, 5c, 5d) ou plus, dans lequel les segments de mât (5a, 5b, 5c, 5d) sont reliés de manière mobile par pivotement au moyen de respectivement un entraînement (6a, 6b, 6c, 6d) au chariot de rotation (3) ou au segment de mât (5a, 5b, 5c, 5d) respectivement adjacent par l'intermédiaire d'articulations, avec un dispositif de commande (7) pilotant les entraînements (6, 6a, 6b, 6c, 6d) dans un mode de fonctionnement normal pour le déplacement de mât, et un système de détection servant à détecter la position d'au moins un point du mât articulé (4) ou un angle de pivotement ($\varphi 1$, $\varphi 2$, $\varphi 3$, $\varphi 4$) d'au moins une articulation, dans lequel le dispositif de commande (7) est mis au point pour limiter la vitesse du déplacement de mât en fonction des signaux de sortie instantanés du système de détection de mât, et une soupape de commande (8), laquelle est reliée à des conduites de travail (9b, 10b) hydrauliques d'un entraînement (6, 6a, 6b, 6c, 6d) aux fins de son pilotage, dans lequel la soupape de commande (8) est pilotée dans le mode de fonctionnement normal par l'intermédiaire du dispositif de commande (7), lequel limite l'ajustement du segment de mât (5, 5a, 5b, 5c) de telle manière qu'une vitesse de déplacement prédéfinie n'est pas dépassée,
   **caractérisé en ce**
   **que** les entraînements (6, 6a, 6b, 6c, 6d) peuvent être commandés manuellement dans un mode de fonctionnement d'urgence, dans lequel est prévu au moins un moyen de limitation (11, 12, 13, 14), qui limite dans le mode de fonctionnement d'urgence la vitesse de déplacement d'au moins un des entraînements (6, 6a, 6b, 6c, 6d) à une valeur maximale prédéfinie de manière fixe, le moyen de limitation étant conçu comme le moyen de limitation étant conçu comme une soupape d'urgence montée en parallèle avec la soupape de commande (8), la soupape d'urgence présentant des leviers manuels actionnables pour la commande en fonctionnement d'urgence.

2. Manipulateur de grande taille (1) selon la revendication 1, **caractérisé en ce que** la soupape d'urgence prévoit une limitation du débit.

3. Manipulateur de grande taille (1) selon la revendication 1 ou 2, **caractérisé en ce qu'**est prévue une autre soupape à avance rapide commutée en parallèle de la soupape de commande (8) et/ou de la soupape d'urgence, laquelle est fournie pour un ajustement rapide du segment de mât (5a, 5b, 5c, 5d).

4. Procédé de commande du déplacement d'un mât articulé (4) d'un manipulateur de grande taille (1), en particulier d'une pompe à béton automotrice, dans lequel le mât articulé (4) comprend deux segments de mât (5, 5a, 5b, 5c) ou plus, les segments de mât (5, 5a, 5b, 5c) sont reliés de manière mobile par pivotement au moyen de respectivement un entraînement (6, 6a, 6b, 6c) au chariot de rotation (3) ou segment de mât (5, 5a, 5b, 5c) respectivement adjacent par l'intermédiaire d'articulations, dans lequel l'angle de pivotement ($\varphi 1$, $\varphi 2$, $\varphi 3$, $\varphi 4$) d'au moins une articulation du mât articulé (4) ou la position d'au moins un point du mât articulé (4) sont détectés par un système de détection, dans lequel la vitesse du déplacement de mât est limitée dans un mode de fonctionnement normal en fonction des signaux de sortie instantanés du système de détection de mât,
   **caractérisé en ce**
   **que** les entraînements individuels (6, 6a, 6b, 6c) des articulations sont commandés proportionnellement en fonctionnement normal selon une commande d'entraînement, dans laquelle la commande d'entraînement spécifie les vitesses cibles des entraînements (6, 6a, 6b, 6c, 6d), la vitesse de la pointe (EP) du mât articulé (4) résultant de la commande d'entraînement, des longueurs des segments de mât et du signal de sortie du système de détection de mât est déterminée, les spécifications de vitesse des différents entraînements (6, 6a, 6b, 6c, 6d) étant réduites par rapport à la commande d'entraînement, dès que la commande d'entraînement amènerait à ce que la vitesse de la pointe (EP) du mât articulé (4) dépasse une valeur seuil prédéterminée, la vitesse de tous les entraînements (6, 6a, 6b, 6c, 6d) étant réduite du même facteur par rapport à la commande d'entraînement, de sorte que la vitesse de la pointe (EP) du mât articulé (4) soit toujours inférieure ou égale à la valeur seuil prédéterminée, c'est-à-dire indépendante de la position actuelle du mât, qui résulte des angles de pivotement ($\varphi$1, $\varphi$2, $\varphi$3, $\varphi$4) détectés par les capteurs des articulations, dans laquelle la vitesse du déplacement de mât est limitée dans un mode de fonctionnement d'urgence **en ce que** la vitesse de déplacement d'au moins un des entraînements (6, 6a, 6b, 6c, 6d) est limitée à une valeur maximale prédéfinie de manière fixe.

Fig. 1

Fig. 2b

Fig. 2a

Fig. 3

**EP 3 548 752 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3015625 A1
- JP 2013091931 A
- US 2008162005 A1
- EP 3088782 A1
- WO 2014166637 A1
- JP 2013091933 A
- US 2016076263 A1
- DE 102013006232 A1